(19) Europäisches Patentamt / European Patent Office / Office européen des brevets

(11) **EP 3 008 144 B1**

(12) **EUROPÄISCHE PATENTSCHRIFT**

(45) Veröffentlichungstag und Bekanntmachung des Hinweises auf die Patenterteilung:
**08.03.2017   Patentblatt 2017/10**

(51) Int Cl.:
***C09D 167/00*** *(2006.01)*   ***C09D 4/00*** *(2006.01)*

(21) Anmeldenummer: **14732117.8**

(86) Internationale Anmeldenummer:
**PCT/EP2014/062082**

(22) Anmeldetag: **11.06.2014**

(87) Internationale Veröffentlichungsnummer:
**WO 2014/198749 (18.12.2014 Gazette 2014/51)**

(54) **RICHTUNGSUNABHÄNGIG SCHLAGZÄHE 3-D-FORMTEILE**

IMPACT RESISTANT DIRECTION-INDEPENDENT 3-D MOULDED COMPONENTS

PIÈCE MOULÉE EN 3D RÉSISTANTE AUX CHOCS EN FONCTION DE LA DIRECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2013   EP 13172190**

(43) Veröffentlichungstag der Anmeldung:
**20.04.2016   Patentblatt 2016/16**

(73) Patentinhaber: **Covestro Deutschland AG**
**51373 Leverkusen (DE)**

(72) Erfinder:
• **KOSTROMINE, Serguei**
  **53913 Swistal (DE)**
• **PETZOLDT, Joachim**
  **40789 Monheim (DE)**
• **HOVESTADT, Wieland**
  **42799 Leichlingen (DE)**
• **HOBEIKA, Sven**
  **42699 Solingen (DE)**
• **KÜNZEL, Roland**
  **51381 Leverkusen (DE)**

(74) Vertreter: **Levpat**
**c/o Covestro AG**
**Gebäude 4825**
**51365 Leverkusen (DE)**

(56) Entgegenhaltungen:
**EP-A2- 0 323 560**   **WO-A1-00/63015**
**WO-A1-2005/080484**   **WO-A1-2005/118689**
**WO-A1-2009/005970**

**Beschreibung**

Die vorliegende Erfindung betrifft richtungsunabhängig schlagzähe 3-D-Kunststoffformteile mit einer kratzfesten und lösemittelbeständigen Oberfläche sowie film-insert-molding-Verfahren zu deren Herstellung.

Für die Herstellung von Kunststoffteilen im Spritzgussverfahren hat sich die Film-Insert-Molding-Technologie etabliert. Sie sieht vor, dass die Frontoberfläche eines Teiles zuerst aus einer beschichteten Folie zwei- oder dreidimensional vorgefertigt wird und danach mit einer Kunststoffschmelze von der Rückseite gefüllt bzw. hinterspritzt wird.

Dabei ist es oft erwünscht, dass die Frontseite gegen chemische und mechanische Einwirkungen ausreichend geschützt ist. Dieses wird im Stand der Technik oftmals durch eine entsprechende Beschichtung oder Lackierung der Oberfläche erreicht. Um eine Nassbeschichtung der fertigen dreidimensionalen Teile zu vermeiden, ist es dabei vorteilhaft, dass eine solche Lackierung oder Beschichtung schon auf der Folie aufgebracht sein soll, welche dann mit der Folie alle weiteren Umformungsschritte durchläuft und danach endgültig ausgehärtet wird, z.B. durch UV-Belichtung.

Daraus entsteht ein ganz spezielles Eigenschaftsprofil für beschichtete Folien, die zu dieser Technologie passen. Im Stand der Technik hat sich für diese Produktklasse der Begriff *"Formable Hardcoating"* durchgesetzt, nämlich eine Folienbeschichtung, die zuerst ausreichend blockfest ist, sich dann aber zusammen mit dem Substrat thermisch beliebig verformen lässt und am Ende durch UV-Härten die Eigenschaften einer Schutzschicht bekommt.

Eine solche Eigenschaftskombination im Sinne von Blockfestigkeit und thermoplastisches Verhalten der primären Beschichtung zusammen mit dem großen latenten Potential zur UV-Vernetzung ist schwer zu realisieren.

Die meisten Lösungsansätze für diese Aufgabenstellung im Stand der Technik umfassen den Einsatz von Makromonomeren, die hauptsächlich durch *Dual-Cure*-Verfahren hergestellt werden, wie es unter anderem beschrieben ist in Beck, Erich (BASF), Scratch resistant UV coatings for automotive applications, Pitture e Vernici, European Coatings (2006), 82(9), 10-19; Beck, Erich, Into the third dimension: three ways to apply UV coating technology to 3D-automotive objects, European Coatings Journal (2006), (4), 32, 34, 36, 38-39; Petzoldt, Joachim; Coloma, Fermin (BMS), New three-dimensionally formable hardcoat films, JOT, Journal fuer Oberflaechentechnik (2010), 50(9), 40-42 EP 2113527 A1, Petzoldt et al., Development of new generation hardcoated films for complex 3D-shaped FIM applications, RadTech Asia 2011, Conference Proceedings.

Des Weiteren werden an Kunststoffteile, die im Auto, in jeglichen anderen Transportmitteln, Elektro- und Elektronikgeräten und in der Bauindustrie einen breiten Einsatz finden, in Bezug auf ihre Schlag- und Stoßzähigkeit bis hin zu tiefen anwendungsrelevanten Temperaturen von bis zu - 30°C hohe Anforderungen gestellt. Es ist bekannt, dass beispielsweise Erzeugnisse aus Polycarbonat diese Eigenschaft aufweisen. Allerdings weisen Polycarbonat-Oberflächen auch eine gewisse Empfindlichkeit gegenüber Kratzern und Lösungsmitteln auf. Es ist allerdings ebenfalls bekannt, dass auf Polycarbonat aufgebrachte, spröde bzw. weniger schlagzähe Polymerschichten, wie beispielsweise Lacke zur Erhöhung der Kratzfestigkeit oder PMMA-Deckschichten, die Schlagzähigkeit von Polycarbonat negativ beeinflussen. Kunststoffteile aus coextrudierten PC/PMMA-Folien zeigen daher in der Regel keine akzeptable Schlagzähigkeit, insbesondere dann, wenn der Stoß von der Seite des Polycarbonates kommt, das Polymethylmethacrylat also in der Zugzone des Stoßes liegt.

Es besteht daher ein erheblicher Bedarf an auch bei tiefen Temperaturen richtungsunabhängig schlagzähen, flexibel und effizient durch Film insert molding erhältlichen Formteilen, die gleichzeitig eine kratzfeste und lösemittelbeständige Oberfläche aufweisen.

Die vorliegende Erfindung stellt daher folgendes bereit:

Ein richtungsunabhängig schlagzähes 3-D-Formteil, umfassend ein thermoplastisches Polymer, eine Folie aus einem thermoplastischen Polymer und eine die Oberfläche des Formteils bildende kratzfeste und lösemittelbeständige Oberflächenbeschichtung der Folie mit einer Dicke im Bereich von $\geq 0,1\ \mu m$ bis $\leq 20\ \mu m$, die erhältlich ist durch Beschichten einer Oberfläche der Folie mit einem Beschichtungsmittel, gemäss Anspruch 1, umfassend

(a) mindestens ein thermoplastisches Polymer mit einer mittleren Molmasse von mindestens 100.000 g/mol in einem Gehalt von 30 Gew.-% des Festanteils des Beschichtungsmittels;
(b) mindestens 30 Gew.-% eines UV-härtbaren Reaktivderdünners;
(c) 0,1 bis 10 Gewichtsteile mindestens eines Fotoinitiators; und
(d) mindestens ein organisches Lösungsmittel,

wobei der Anteil an ethylenisch ungesättigten Gruppen mindestens 3 mol pro kg des Festanteils des Beschichtungsmittels beträgt.

Das erfindungsgemäße Beschichtungsmittel kann einfach und effizient erhalten werden. Darüber hinaus sind damit erhältliche Beschichtungen auf vielen Oberflächen wie insbesondere für die im Film insert molding-Verfahren in Frage kommenden Folien ausreichend blockfest, lassen sich dann aber zusammen mit dem beschichteten Substrat thermisch beliebig verformen und bekommen nach Härtung wie beispielsweise durch UV-Strahlung eine kratzfeste und lösemittelbeständige Oberfläche. Darüber hinaus wurde überraschend gefunden, dass sich insbesondere dann eine richtungsunabhängige Schlagzähigkeit des Formkörpers erhalten wird, wenn die Oberflächenbeschichtung der Folie in einer Dicke im Bereich von $\geq 0,1$ μm bis $\leq 20$ μm vorliegt.

Als eine anwendungstechnisch ausreichende richtungsunabhängige Zähigkeit im Sinne der vorliegenden Erfindung wird dabei verstanden, dass sich die Formkörper in einem an DIN EN ISO 6603-1 angelehnten Durchstoßversuch bei -30°C bis zu einer Auftreffgeschwindigkeit von 2,5 m/s, bevorzugt bis 3,0 m/s, besonders bevorzugt bis 3,5 m/s von beiden Seiten zäh verhalten. Zäh wird im Sinne des Durchstoßversuches über die Art des dabei erzeugten Bruches definiert, nämlich durch die Unterscheidung in Zähbrüche und Sprödbrüche, wie im Folgenden erläutert werden wird: Der Durchstoßversuch in Anlehnung an DIN EN ISO 6603-1 wird mit einer Fallmasse von 13 kg, einer Probengröße von 50x50 mm², einem Dorndurchmesser von 20 mm und einem runden Auflager mit 40 mm Lochdurchmesser durchgeführt, wobei die Auftreffgeschwindigkeit zur Bestimmung des Zäh/Spröd-Überganges variiert wird. Die Art des Bruches (Zäh-/Sprödbruch) kann anhand des Bruchbildes der geschlagenen Prüfkörper ermittelt werden: Als Zähbruch gilt dabei sowohl eine plastische Deformation ohne Rissbildung (normgemäß), als auch (abweichend von der Norm) ein Durchstoßen des Probekörpers, wenn er in einem Stück verbleibt. Als Sprödbruch wird das Zerbrechen der Probe in zwei oder mehr Teile gewertet.

Die Kratzfestigkeit lässt sich anhand der Bleistifthärte bestimmen, wie sie in Anlehnung an ASTM D 3363 gemessen werden kann. Eine Bewertung der Lösemittelbeständigkeit kann in Anlehnung an EN ISO 2812-3:2007 erfolgen. Bemerkenswert ist, dass die durch das erfindungsgemäße Beschichten der Folie mit dem Beschichtungsmittel und abschließendem Härten durch UV-Strahlung erhaltene Oberfläche des Formkörpers selbst gegenüber dem sonst für Polycarbonat-Oberflächen sehr schädlichen Lösungsmittel Aceton eine gute Beständigkeit aufweist.

Es ist dabei besonders bevorzugt, dass das erfindungsgemäße Formteil mittels film insert molding erhältlich ist, wobei das film insert molding das Füllen einer 3D-geformten, die Schutzschicht umfassenden Folie mit der Schmelze eines thermoplastischen Polymers auf der Schutzschicht abgewandten Seite der Folie umfasst.

Film insert molding im Sinne der vorliegenden Erfindung ist ein Verfahren, in dem die Folie mit dem Beschichtungsmittel beschichtet wird, die Folie danach beispielsweise thermisch dreidimensional verformt wird, und danach die Folie mit dem thermoplastischen Polymer auf der folienabgewandten Seite hinterschichtet bzw. hinterspritzt wird. Das Beschichten kann dabei bereits einen Trocknungsvorgang umfassen. Vorzugsweise wird vor dem Hinterschichtungsvorgang die Beschichtung auf der Oberfläche der Folie mittels aktinischer Strahlung, vorzugsweise UV-Strahlung, gehärtet.

Als zu beschichtende Folien werden bevorzugt transparente Thermoplasten wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt. Geeignete Thermoplasten sind beispielsweise Polyacrylate, Poly(meth)acrylate (z.B. PMMA; z.B. Plexiglas® von der Fa. Röhm), Cycloolefin-Copolymere (COC; z.B. Topas® von der Fa. Ticona; Zenoex® von der Fa. Nippon Zeon oder Apel® von der Fa. Japan Synthetic Rubber), Polysulfone (Ultrason@ von der BASF oder Udel® von der Fa. Solvay), Polyester, wie z.B. PET oder PEN, Polycarbonat (PC), Polycarbonat/Polyester-Blends, z.B. PC/PET, Polycarbonat/ Polycyclohexylmethanolcyclohexandicarboxylat (PCCD; Xylecs® von der Fa GE), Polycarbonat/PBT und Mischungen daraus.

In einer besonders vorteilhaften und bevorzugten Ausführungsform umfasst die Folie des erfindungsgemäßen Formkörpers Polycarbonat oder Copolycarbonat.

Aufgrund der hervorragenden Schlagzähigkeit bei gleichzeitiger Transparenz wird Polycarbonat im Rahmen der vorliegenden Erfindung auch als thermoplastisches Polymer zum Hinterspritzen bzw. Füllen der 3D-geformten und mit der Schutzschicht beschichteten Folie verwendet. In einer Ausführungsform der vorliegenden Erfindung umfasst das thermoplastische Polymer damit Polycarbonat. Für die Erfindung geeignete Polycarbonate und Polycarbonat-Zubereitungen sowie Polycarbonat-Folien sind beispielsweise unter den Handelsnamen Makrolon®, Bayblend® und Makroblend® (Bayer MaterialScience AG) erhältlich. Geeignete Polycarbonate für die Herstellung der erfindungsgemäßen Polycarbonatzusammensetzungen sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte $\overline{M}_w$ von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Folie bzw. des thermoplastischen Polymers des 3D-Formkörpers können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Das Beschichtungsmittel gemäss Anspruch 1 einen weiteren Gegenstand der vorliegenden Erfindung dar. Dieses umfasst (a) mindestens ein thermoplastisches Polymer mit einer mittleren Molmasse von mindestens 100.000 g/mol in einem Gehalt von 30 Gew.-% des Festanteils des Beschichtungsmittels; (b) mindestens 30 Gew.-% eines UV-härtbaren Reaktiwerdünners; (c) $\geq 0,1$ bis $\leq 10$ Gewichtsteile mindestens eines Fotoinitiators; und (d) mindestens ein organischen Lösungsmittel, wobei der Anteil an ethylenisch ungesättigten Gruppen mindestens 3 mol pro kg des Festanteils des Beschichtungsmittels beträgt.

Unter thermoplastischen Polymeren versteht man Polymethylmethacrylat (PMMA), Polyester verschiedener Art (z.B. PET, PEN, PBTP und UP), andere Kunststoffe, wie Hart-PVC, Celluloseestern (wie CA, CAB, CP), Polystyrol (PS) und Copolymere (SAN, SB und MBS), Polyacrylnitril (PAN), ABS-Kunststoffe, Acrylnitrilmethylmethacrylat (AMMA), Acrylnitril-Styrol-Acrylester (ASA), Polyurethan (PUR), Polyethylen (PE, PE-HD, -LD, -LLD, -C), Polypropylen (PP), Polyamid (PA), Polycarbonat (PC) oder Polyethersulfon (PES)/ (Kurzbezeichnungen nach DIN 7728T1).

Es wurde gefunden, dass erfindungsgemäss thermoplastische Polymere mit einem Molekulargewicht Mw von mindestens 100.000 g/mol vorteilhaft zu einer ausreichenden Blockfestigkeit der getrockneten Beschichtung einerseits und andererseit zur Kratzfestigkeit und Lösemittelbeständigkeit der durch beispielsweise UV-Strahlung gehärteten erfindungsgemäßen Oberflächenbeschichtung beitragen. Weiter bevorzugt sind thermoplastische Polymere mit einem Molekulargewicht Mw von mindestens 150.000 g/mol, besonders bevorzugt mit einem Molekulargewicht Mw von mindestens 200.000 g/mol. Insbesondere sind lineare thermoplastische Polymere, die die vorstehenden Bedingungen erfüllen, bevorzugt.

Die Vicaterweichungstemperaturen VET (ISO 306) liegen bevorzugt im Bereich von mindestens 90°C, vorteilhaft mindestens 95°C, besonders vorteilhaft mindestens 100°C.

Vorteilhaft als thermoplastisches Polymer ist Polymethylmethacrylat.

Unter Polymethylmethacrylat (PMMA) versteht man Polymethylmethacrylat-Homopolymer und Copolymere auf Methylmethacrylat-Basis mit dem Methylmethacrylat-Anteil von mehr als 70 Gew. %, wie sie beispielsweise unter den Handelsnamen *Degalan®, Degacryl®, Plexyglas®, Acrylite®* (Fa. Evonik), *Altuglas, Oroglas* (Fa. Arkema), *Elvacite®, Colacryl®, Lucite®* (Fa. Lucite) und unter anderem unter den Bezeichnungen *Acrylglas, Conacryl, Deglas, Diakon, Friacryl, Hesaglas, Limacryl, PerClax* und *Vitroflex* bekannt sind.

Erfindungsgemäss umfasst das thermoplastische Polymer (a) PMMA-Homopolymere und Copolymere aus 70 Gew.-% bis 99,5 Gew.-% Methylmethacrylat und 0,5 Gew.-% bis 30 Gew.-% Methylacrylat. Besonders bevorzugt sind PMMA-Homopolymere und Copolymere aus 90 Gew.-% bis 99,5 Gew.-% Methylmethacrylat und 0,5 Gew.-% bis 10 Gew.-% Methylacrylat. Die Vicaterweichungstemperaturen VET (ISO 306) liegen in einer bevorzugten Ausführungsform im Bereich von mindestens 90°C, bevorzugt von 100°C bis 115°C.

Es wurde gefunden, dass insbesondere PMMA-Homopolymere und Copolymere mit einem Molekulargewicht Mw mindestens 100.000 g/mol besonders vorteilhaft zur Kratzfestigkeit und Lösemittelbeständigkeit der erfindungsgemäßen Oberflächenbeschichtung beitragen.

Erfindungsgemäss eingesetzt werden PMMA-Homopolymere und Copolymere mit einem Molekulargewicht Mw von mindestens 100.000 g/mol, besonders bevorzugt mit einem Molekulargewicht Mw von mindestens 150.000 g/mol, ganz besonders bevorzugt mit einem Molekulargewicht Mw von mindestens 200.000 g/mol.

Erfindungsgemäss erfolgt die Bestimmung des Molekulargewichts Mw per Gelpermeationschromatographie (siehe z. B. H. F. Mark et al., Encyclopedia of Polymer Science and Engineering, 2nd. Edition, Vol. 10, Seiten 1 ff., J. Wiley, 1989).

Der Anteil des thermoplastischen Polymers beträgt im Festanteil des Beschichtungsmittels mindestens 30 Gew.-%, besonders bevorzugt mindestens 40 Gew.-% und ganz besonders bevorzugt 45 Gew.-%.

Als Komponente (b) des erfindungsgemäßen Beschichtungsmittel sind als Reaktivverdünner bifunktionelle, trifunktionelle, tetrafunktionelle, pentafunktionelle oder hexafunktionelle Acryl- und/oder Methacrylmonomere einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als Reaktivverdünner erfindungsgemäß bevorzugt eignende Ester sind Glykoldiacrylat und - dimethacrylat, Butandioldiacrylat oder -dimethacrylat, Dimethylolpropan-diacrylat oder - dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder -tetramethacrylat, Dipentaerythritpenta/hexaacrylat (DPHA),1,2,3,4-Butantetraoltetraacrylat oder - tetramthacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitan-tetra-, -penta-oder -hexaacrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Als Reaktivverdünner bzw. als Komponente b) des erfindungsgemäßen Beschichtungsmittels können alkoxylierte Di-, Tri-, Tetra-, Penta- und Hexacrylate oder - methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrittriacrylat, Pentaerythrittrimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat. Beispiele für alkoxylierte Tetra-, Penta- oder Hexaacrylate sind alkoxyliertes, bevorzugt ethoxyliertes Pentaerythrittetraacrylat, Dipentaerythrittetraacrylat, Dipentaerythritpentaacrylat Dipentaerythrithexaacrylat, Pentaerythrittetramethacrylat, Dipentaerythrittetramethacrylat, Dipentaerythritpentamethacrylat oder Dipentaerythrithexamethacrylat. In den alkoxylierten Diacrylaten oder -methacrylaten, Triacrylaten oder -methacrylaten, Tetraacrylaten oder -methacrylaten, Pentaacrylaten oder - methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat- oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat), Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

Erfindungsgemäss umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

Auch einsetzbar sind Gemische solch vernetzender multifunktioneller Monomere und monofunktioneller Monomere wie beispielsweise Methylmethacrylat. Der Anteil der multifunktionellen Monomere in einem solchen Gemisch beträgt bevorzugt mindestens 20 Gew.-%.

In einer weiteren erfindungsgemässen Ausführungsform umfasst der Reaktivverdünner (b) des erfindungsgemäßen Beschichtungsmittels Dipentaerythritol penta/hexaacrylat.

Der Reaktivverdünner ist ein wesentlicher Teil des erfindungsgemäßen Beschichtungsmittels und der erfindungsgemäßen Beschichtung. Der Anteil des Reaktivverdünners insgesamt beträgt im Festanteil des Beschichtungsmittels mindestens 30 Gew.-%, besonders bevorzugt mindestens 40 Gew.-%, ganz besonders bevorzugt mindestens 45 Gew.-%.

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel einen Gehalt an ethylenisch ungesättigten Gruppen von mindestens 3,0 mol pro kg Festgehalt des Beschichtungsmittels, bevorzugt mindestens 3,5 mol pro kg, besonders bevorzugt mindestens 4,0 mol pro kg Festgehalt des Beschichtungsmittels.

Der Begriff des mindestens einen Fotoinitiator des erfindungsgemäßen Beschichtungsmittel umfasst die gängigen dem Fachmann bekannten, kommerziell erhältlichen Verbindungen wie z. B. $\alpha$-Hydroxyketone, Benzophenon, $\alpha,\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Photoinitiatoren allein oder in Kombination von zwei oder mehreren oder in Kombination mit einem der obigen Polymerisationsinitiatoren benutzt werden können.

Als UV-Fotoinitiatoren werden beispielsweise die IRGACURE®-Typen von BASF eingesetzt, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner werden die DAROCUR®-Typen von BASF eingesetzt, so beispielsweise die Typen DAROCUR® MBF, DAROCUR® 1173, DAROCUR® TPO, DAROCUR® 4265 eingesetzt. U.a. werden die weiteren UV-Photoinitiatoren eingesetzt, z.B. Esacure One (Fa. Lamberti).

Fotoinitiatoren sind mit im Bereich von $\geq$ 0,1 bis $\leq$ 10 Gewichtsteilen des Feststoffgehaltes des Beschichtungsmittels im Beschichtungsmittel enthalten.

Das Beschichtungsmittel enthält zudem über die 100 Gew.-Teile der Komponenten 1) bis 3) hinaus ein oder mehrere organische Lösungsmittel. Solche organischen Lösungsmittel können beispielsweise ausgewählt sein aus der Gruppe enthaltend aromatische Lösemittel, wie z.B. Xylol oder Toluol, Ketone, wie z.B. Aceton, 2-Butanon, Methylisobutylketon, Diacetonalkohol, Alkohole, wie z.B. Methanol, Ethanol, i-Propanol, Butanol,1-Methoxy-2-propanol, Ether, wie z.B. 1,4-Dioxan, Ethylenglykol-n-propylether, oder Ester, wie z.B. Essigsäureethylester, Essigsäurebutylester, 1-Methoxy-2-propylacetat oder Mischungen enthaltend diese Lösemittel.

Bevorzugt sind Ethanol, i-Propanol, Butanol, Essigsäureethylester, Essigsäurebutylester, 2-Methoxypropylalkohol, Diacetonalkohol, Xylol oder Toluol. Besonders bevorzugt sind i-Propanol, Butanol, Essigsäureethylester, Essigsäurebutylester, 1-Methoxy-2-propanol, Diacetonalkohol und deren Gemische. Ganz besonders bevorzugt sind 1-Methoxy-2-propanol und Diacetonalkohol, insbesondere bevorzugt ist 1-Methoxy-2-propanol.

Die Lackzusammensetzung enthält bevorzugt zusätzlich zu den 100 Gew.-Teilen der Komponenten 1) bis 3) 0 bis 900 Gew.-Teile, besonders bevorzugt 100 bis 850 Gew.-Teile, ganz besonders bevorzugt 200 bis 800 Gew.-Teile wenigstens eines organischen Lösungsmittels (Komponente 4).

Das Beschichtungsmittel kann zudem über die 100 Gew.-Teile der Komponenten 1) bis 3) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Die Lackzusammensetzung enthält bevorzugt zusätzlich zu den 100 Gew.-Teilen der Komponenten 1) bis 3) 0 bis 35 Gew.-Teile, besonders bevorzugt 0 bis 30 Gew.-Teile, ganz besonders bevorzugt 0,1 bis 20 Gew.-Teile wenigstens eines weiteren Lackadditivs. Bevorzugt beträgt der Gesamtanteil aller in der Lackzusammensetzung enthaltenen Lackadditive 0 bis 20 Gew.-Teile, besonders bevorzugt 0 bis 10 Gew.-Teile, ganz besonders bevorzugt 0,1 bis 10 Gew.-Teile.

Die Zusammensetzung des Beschichtungsmittels kann anorganische Nanopartikel zur Erhöhung der mechanischen Beständigkeit, wie z.B. Kratzfestigkeit und/oder Bleistifthärte, enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Photoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

In einer ganz besonders bevorzugten Ausführungsform der vorliegenden Erfindung umfasst das Beschichtungsmittel gemäß Anspruch 1 (a) mindestens 30 Gew.-% im Feststoffanteil des Beschichtungsmittels von mindestens einem thermoplastischen Polymer mit einer mittleren Molmasse Mw von mindestens 100.000 g/mol, bevorzugt mindestens 150.000 g/mol, besonders bevorzugt mindestens 200.000 g/mol und einer Vicaterweichungstemperatur VET gemäß ISO 306 von mindestens 90 °C, bevorzugt mindestens im Bereich von 100 bis 115 °C , (b) mindestens 30 Gew.-%, bevorzugt mindestens 40 Gew.-%, besonders bevorzugt mindestens 45 Gew.-% im Feststoffanteil des Beschichtungsmittels mindestens eines UV-härtbaren Reaktivverdünners, (c) 0,1 bis 10 Gewichtsteilen des Beschichtungsmittels mindestens eines Fotoinitiator und (d) mindestens ein organisches Lösungsmittel, bevorzugt 1-Methoxy-2-propanol. Vorzugsweise sind die Formkörper der vorliegenden Erfindung durch ein film insert molding-Verfahren erhältlich. Ein weiterer Gegenstand der vorliegenden Erfindung ist daher ein Film-Insert-Molding-Verfahren gemäss Anspruch 8 zur Herstellung eines Formteils, umfassend die Schritte

    (i) Beschichten einer Oberfläche einer Folie mit einem Beschichtungsmittel, umfassend

        (a) mindestens ein thermoplastisches Polymer mit einer mittleren Molmasse von mindestens 100.000 g/mol in einem Gehalt von 30 Gew.-% des Festanteils des Beschichtungsmittels;
        (b) mindestens 30 Gew.-% eines UV-härtbaren Reaktiwerdünners
        (c) 0,1 bis 10 Gewichtsteile mindestens eines Fotoinitiators; und
        (d) mindestens ein organisches Lösungsmittel,

    wobei der Anteil an ethylenisch ungesättigten Gruppen mindestens 3 mol pro kg des Festanteils des Beschichtungsmittels beträgt und die Dicke der Beschichtung im Bereich von $\geq 0{,}1\ \mu m$ bis $\leq 20\ \mu m$ liegt,
    (ii) Trocknen der Beschichtung;
    (iii) gegebenenfalls zurechtschneiden, dekaschieren, bedrucken und/oder thermisches oder mechanisches Verformen der Folie;
    (iv) Härten der Beschichtung durch aktinische Strahlung, vorzugsweise UV-Strahlung;
    (v) Hinterschichten der unbeschichteten Oberfläche der Folie mit einem thermoplastischen Polymer.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (II) umfasst bevorzugt das Ablüften bei Raumtemperatur und/oder erhöhter Temperatur, wie vorzugsweise bei 20 - 200 °C, besonders bevorzugt bei 40 - 120 °C. Nach dem Trocknen der Beschichtung ist diese blockfest, so dass das beschichtete Substrat, insbesondere die beschichtete Folie kaschiert, bedruckt, und/oder thermisch verformt werden kann. Insbesondere das Verformen ist dabei bevorzugt, da hier schon durch das Verformen einer beschichteten Folie die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von $\geq 200$ nm bis $\leq 750$ nm, oder durch Bestrahlen mit energiereichen Elektronen (Elektronenstrahlung, zum Beispiel von $\geq 90$ keV bis $\leq 300$ keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von $\geq 80$ mJ/cm$^2$ bis $\leq 5000$ mJ/cm$^2$.

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von $\geq 0{,}1$ Gewichts-% bis $\leq 10$ Gewichts-%, besonders bevorzugt von $\geq 0{,}2$ Gewichts-% bis $\leq 3{,}0$ Gewichts-% bezogen auf den Festkörper der Beschichtung eingesetzt. Zur Härtung dieser Beschichtungen wird bevorzugt eine Dosis von $\geq 80$ mJ/cm$^2$ bis $\leq 5000$ mJ/cm$^2$ eingesetzt.

Das Hinterspritzen der beschichteten Folie nach erfolgter Härtung der Folienbeschichtung und der optionalen, meist gewünschten Umformung der beschichteten Folie ist dem Fachmann durch das film insert molding-Verfahren, wie es beispielsweise in WO 2004/082926 A1 und WO 02/07947 A1 beschrieben ist, wohlbekannt. In einer bevorzugten Ausführungsform des erfindungsgemäßen Verfahrens erfolgt das Hinterschichten der Folie in Schritt (V) mittels Extrusion oder Spritzguss, vorzugsweise mit Polycarbonatschmelze. Die Verfahren der Extrusion und des Spritzgusses hierzu sind dem Fachmann wohlbekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Aufgrund der besonders vorteilhaften Eigenschaftskombination der richtungsunabhängigen Schlagzähigkeit auch bei tiefen Temperaturen und der kratzfesten und lösemittelbeständigen Oberfläche eignen sich die erfindungsgemäßen 3D-Formteile für den Einsatz in Erzeugnissen in den Bereichen der Architektur, des Automobilbaus, des Schienenfahrzeugbaus, des Flugzeugbaus, der Fertigung von Visieren von Schutzhelmen und der Herstellung von Elektronikerzeugnissen. Ein weiterer Gegenstand der vorliegenden Erfindung betrifft daher ein Erzeugnis, umfassend das erfindungsgemäße 3D-Formteil. Bevorzugt ist das Erzeugnis eine transparente Verscheibung, Abdeckung oder Sichtfenster aus den Bereichen der Architektur, des Automobilbaus, des Schienenfahrzeugbaus, des Flugzeugbaus, der Fertigung von Visieren von Schutzhelmen und der Herstellung von Elektronikerzeugnissen oder ein transparenter oder auch nicht transparenter Teil einer Innenausstattung oder Außenausstattung von Automobilen, wie beispielsweise eines Armaturenbrettes, einer Säulenabdeckung, eines Schiebedachs oder einer Stoßstange.

Ein weiterer Gegenstand betrifft die Verwendung der erfindungsgemäßen 3D-Formkörper als Architekturverscheibung, Automobilverscheibung, Schienenfahrzeugverscheibung, Wasserfahrzeugverscheibung, Fluggerätverscheibung, Karosserieabdeckteil, Windshield, Helmvisier, Elektronikgehäuseteil, Innenaustattungsteil von Automobilen, Schienenfahrzeugen, Wasserfahrzeugen oder Flugzeugen.

## Beispiele:

### Bewertungsmethoden

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

### Bewertung der Blockfestigkeit

Zur Simulation der Blockfestigkeit von aufgerollten vorgetrockneten beschichteten Folien reichen klassische Prüfmethoden wie etwa in DIN 53150 beschrieben nicht aus, weshalb auf nachfolgende Prüfung zurückgegriffen wurde: Die Beschichtungsmaterialien wurden mit einer handelsüblichen Rakel (Sollnassschichtdicke 100 $\mu$m) auf Makrofol DE 1-1 (375 $\mu$m) aufgetragen. Nach einer Ablüftphase von 10 min bei 20 °C bis 25 °C wurde die beschichteten Folien für 10 min bei 110 °C in einem Umluftofen getrocknet. Nach einer Abkühlphase von 1 min wurde eine handelsübliche Haftkaschierfolie GH-X173 natur (Firma Bischof u. Klein, Lengerich, Deutschland) mit einer Kunststoffwalze auf eine Fläche von 100 mm x 100 mm faltenfrei auf der getrockneten beschichteten Folie aufgebracht. Anschließend wurde das kaschierte Folienstück flächig mit einem Gewicht von 10 kg für 1 Stunde belastet. Danach wurde die Kaschierfolie entfernt und die beschichtete Oberfläche visuell beurteilt.

### Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

### Bewertung der Stahlwolle-Verkratzung

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird, wobei die Fläche des Hammers 2,5 cm x 2,5 cm, d.h. ca. 6,25 cm$^2$ beträgt. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgt vor und nach Verkratzung.

Angegeben werden die Differenzwerte bei Glanz und Haze vor und nach Belastung als $\Delta$Glanz und $\Delta$Haze.

### Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:

- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

Bewertung der Schlagzähigkeit

Die Bewertung der Zähigkeit erfolgte dabei anhand eines Falltests aufbauend auf der Norm DIN EN ISO 6603-1. Analog zur Norm wird hierbei ein Durchstoßversuch mit variierter Fallenergie durchgeführt, wobei dieser durch Variation der Fallhöhe bei konstanter Fallmasse erfolgt. Als Maß für die Fallenergie wird die Auftreffgeschwindigkeit direkt mittels Lichtschranke gemessen und als Variationsparameter angegeben.
Abweichend von der Norm wird eine Kombination aus Auflagerdurchmesser und Dorndurchmesser von 40 mm bzw. 20 mm und eine Probengröße von 50 mm x 50 mm verwendet. Die Fallmasse betrug 13 kg, die Prüftemperatur lag bei -30°C.
Zur Charakterisierung der Zähigkeit wurde die Tatsache genutzt, dass polymere Werkstoffe bei Variation bestimmter Parameter (z.B. Temperatur, Deformationsrate, Kerbradius, o.ä.) einen Übergang von zähem zu sprödem Bruchverhalten zeigen. Im vorliegenden Fall wurde die Auftreffgeschwindigkeit des Dorns auf die Probenoberseite als variabler Parameter verwendet.
Als für die Zähigkeit charakteristischer Kennwert wurde eine "kritische Auftreffgeschwindigkeit" definiert, die sich aus dem geometrischen Mittelwert von größter Geschwindigkeit mit zähem und kleinster Geschwindigkeit mit sprödem Bruchverhalten darstellt:

$$v_{krit} = 0,5[\max(v_{zäh}) + \min(v_{spröd})]$$

Zur Bestimmung dieses Zähigkeitskennwertes wurde die kritische Auftreffgeschwindigkeit in einem geeigneten Bereich variiert und das zu einer gewählten Geschwindigkeit gehörende Bruchverhalten (zäh / spröd) bestimmt. Die Art des Bruches (Zäh- / Sprödbruch) wurde anhand des Bruchbildes der geschlagenen Prüfkörper ermittelt: Als Zähbruch gilt dabei sowohl eine plastische Deformation ohne Rissbildung (normgemäß), als auch (abweichend von der Norm) ein Durchstoßen des Probekörpers, wenn er in einem Stück verbleibt - als Sprödbruch wird das Zerbrechen der Probe in zwei oder mehr Teile gewertet.
Die gemessenen kritischen Auftreffgeschwindigkeiten liegen zwischen 2 - 2.5 m/s und 13 m/s. Proben, die auch bei minimaler Auftreffgeschwindigkeit einen Sprödbruch zeigen, werden generell als spröde beurteilt, die kritische Auftreffgeschwindigkeit wird mit "< 2.0 m/s" angegeben.
Jeder Multilagenaufbau ist damit durch die kritische Auftreffgeschwindigkeit charakterisiert und kann damit mit anderen Systemen verglichen und beurteilt werden.
Naturgemäß beeinflusst die Dicke der Prüfkörper das Deformations- und Bruchverhalten unter mechanischer Beanspruchung. Insbesondere zeigen die absoluten Messwerte (Maximalkraft, Bruchdehnung) eine Abhängigkeit von der Probendicke und können für unterschiedlich dicke Prüfkörper nicht direkt miteinander verglichen werden. Daher wurden im Rahmen der vorliegenden Erfindung Proben mit 4 mm Dicke verwendet, deren Verhalten miteinander verglichen werden kann und deren Dicke in einer für viele Anwendungen typischen Größe liegt.
Die relativen Unterschiede in der Zähigkeit der verschiedenen Systeme - in Form der Lage des Zäh/SprödÜberganges bzw. der kritischen Auftreffgeschwindigkeit - lassen sich aber auch auf andere Probendicken übertragen. Die hier beispielhaft an 4 mm dicken Prüflingen ermittelten relativen Zähigkeitsunterschiede zwischen den verschiedenen Lacksystemen und -aufbauten gelten daher auch für Proben mit größeren oder kleineren Dicken.

Der Ausdruck Zugzone bedeutet hierbei die Probenseite, die dem Impaktor gegenüber liegt und daher im Durchstoßversuch auf Zugbeanspruchung belastet wird. Im Gegensatz dazu bezeichnet Druckzone den Probenbereich unter dem Impaktor auf der Auftreffseite, wo größtenteils eine Druckbelastung erfolgt.

**Beispiel 1:** Herstellung eines Beschichtungsmittels

25 g Degacryl MW730 (PMMA, Evonik; $M_w$ 1.000.000-Angabe von Evonik) wurden in 142 g 1-Methoxy-2-propanol bei 100°C in ca. 5 h gelöst. Die Lösung wurde bis auf ca. 30°C abgekühlt. Separat wurden in 83 g 1-Methoxy-2-propanol bei Raumtemperatur folgende Komponenten gelöst: 25 g von Dipentaerythritpenta/hexaacrylat (DPHA, Fa. Cytec), 2,0 g von Irgacure 1000 (Fa. BASF), 1,0 g von Darocur 4265 (Fa. BASF), 0,0625 g von BYK 333 (Fa. BYK). Die zweite Lösung wurde der Polymerlösung unter Rühren zugegeben. Das Beschichtungsmittel wurde noch 3 h bei Raumtemperatur und unter Abschirmung des direkten Lichteinflusses gerührt, abgefüllt und anschließend 1 Tag ruhen gelassen. Die Ausbeute betrug 250 g, die Viskosität (23°C) ca. 9000 mPas und der Feststoffgehalt 19 Gew.-%. Die Doppelbindungsdichte im Feststoffanteil des Beschichtungsmittels wurde mit ca. 5,1 mol/kg berechnet.

**Beispiel 2:** Herstellung eines Beschichtungsmittels

Analog Beispiel 1 wurde aus Degalan M345 (PMMA; Fa.Evonik; $M_w$ 180.000) ein Beschichtungsmittel hergestellt. Die Ausbeute betrug 275 g, der Feststoffgehalt 19 Gew.-%. Die Doppelbindungsdichte im Feststoffanteil des Beschichtungsmittels wurde mit ca. 5,1 mol/kg berechnet.

**Vergleichsbeispiel 1:** Herstellung eines Vergleichsbeschichtungsmittels

Analog Beispiel 1 wurde aus Degalan M825 (PMMA; Fa.Evonik; $M_w$ 80.000) ein Beschichtungsmittel hergestellt. Die Ausbeute betrug 280 g, der Feststoffgehalt 19 Gew.-%. Die Doppelbindungsdichte im Feststoffanteil des Beschichtungsmittels wurde mit ca. 5,1 mol/kg berechnet.

**Beispiel 3:**

Die Beschichtungsmittel der Beispiele 1 und 2 sowie des Vergleichsbeispiels 1 wurden jeweils mittels eines Schlitzgießers der Firma "TSE Troller AG" auf eine Trägerfolie Makrofol DE 1-1 (Bayer MaterialScience AG, Leverkusen, Deutschland) in aufgetragen. Die Schichtstärke der Trägerfolie betrug 250 μm, die Schichtstärken der Beschichtungen sind den Tabellen 1 bis 3 zu entnehmen.
Typische Auftragsbedingungen waren wie folgt:

- Bahngeschwindigkeit 1,3 bis 2,0 m/min
- Nasslackauftrag 20 - 150 μm
- Umlufttrockner 90 - 110°C, bevorzugt im Bereich der TG des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folie wurde durch eines der oben genannten Antragsaggregate geführt und mit der Beschichtungslösung beaufschlagt. Danach wurde die Folie mit der nassen Beschichtung durch den Trockner gefahren. Nach Ausgang aus dem Trockner wurde die jetzt trockene Beschichtung mit einer Kaschierfolie versehen, um diese vor Verschmutzung und Verkratzung zu schützen. Danach wurde die Folie wieder aufgerollt.
Für die Prüfung der Endeigenschaften des Produktes kann die beschichtete Folie nach Ausgang aus dem Trockner vorerst mit UV-Lampe ausgehärtet und dann mit einer Kaschierfolie versehen werden.

**Beispiel 4:** Blockfestigkeit

Die beschichtete Seite der in Beispiel 3 erzeugten, nicht mit UV ausgehärteten Folien wird mit einer Kaschierfolie vom Typ GH-X 173 A (Bischof + Klein, Lengerich, Deutschland) abgedeckt und 1 h bei ca. 23 °C mit einer Aluminiumplatte in den Maßen 4,5 x 4,5 cm$^2$ und einem Gewicht von 2 kg beaufschlagt. Nach der genannten Stunde werden das Gewicht und die Kaschierfolie entfernt und die Oberfläche der Beschichtung wird visuell auf Veränderungen geprüft.
Die Versuche zeigen, dass die Blockfestigkeit der Beschichtungen (kein Abdruck auf der Folie) ab einem Molekulargewicht des Polymethylmethacrylats von 100.000 und mehr gegeben ist.

**Beispiel 5:** Verformungsversuche

Die HPF-Verformungsversuche wurden auf einer SAMK 360 - Anlage der Fa. Niebling (DE) ausgeführt. Das Werkzeug wurde auf 100 °C elektrisch beheizt. Die Folienaufheizung wurde mittels IR Strahler bei 240-260-280°C vorgenommen. Die Heizzeit betrug 16 Sekunden. Es wurde eine Folientemperatur von ca. 170°C erreicht. Die Verformung erfolgte bei einem Verformungsdruck von 100 bar. Das Verformungswerkzeug war eine Heizungs-/Lüftungs-Blende (HL-Blende).

Der Folienbogen wurde auf einer Palette positionsgenau fixiert. Die Palette fuhr durch die Verformungsstation in die Heizzone und verweilte dort die eingestellte Zeit (16 s). Dabei wurde die Folie so aufgeheizt, dass die Folie kurzzeitig eine Temperatur oberhalb des Erweichungspunktes erfuhr, der Kern der Folie war ca. 10-20°C kälter. Dadurch war die Folie relativ stabil, wenn sie in die Verformungsstation eingefahren wurde.

In der Verformungsstation wurde die Folie durch Zufahren des Werkzeuges über dem eigentlichen Werkzeug fixiert, gleichzeitig wird mittels Gasdruck die Folie über das Werkzeug geformt. Die Druckhaltezeit von 7 Sekunden sorgte dafür, dass die Folie das Werkzeug passgenau abformte. Nach der Haltezeit wurde der Gasdruck wieder entlastet. Das Werkzeug öffnete sich und die umgeformte Folie wurde aus der Verformungsstation herausgefahren.

Die Folie wurde anschließend von der Palette entnommen und konnte nun mit UV-Licht ausgehärtet werden.

Mit dem verwendeten Werkzeug wurden Radien bis herunter auf 1 mm abgebildet.

Die UV-Härtung der erfindungsgemäßen Beschichtung wurde mit einer Quecksilberdampf-Hochdrucklampe vom Type evo 7 dr (ssr engineering GmbH, Lippstadt, Deutschland) ausgeführt. Die Anlage war mit dichroitischem Reflektoren und Quarzscheiben ausgestattet und hat eine spezifische Leistung von 160 W/cm. Es wurde eine UV-Dosis von 2,0 J/cm$^2$ und eine Intensität von 1,4 W/cm$^2$ appliziert. Die Oberflächentemperatur sollte > 60 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

Ergebnisse zur Beständigkeit der Beschichtungen, die unter Verwendung der genannten Bedingungen vernetzt wurden, sind Tabelle 1 zu entnehmen.

**Tabelle 1:**

| Nr. | Beschichtung | Dicke der Lackierung | Trägerfolie | Lösemittel IP/MPA/X/EA/ Ac 1h/RT | Bleistifthärte 500 g Mitsubishi | Stahlwolle (Fa. Rakso, No. 00) 560 g/ 10 DH $\Delta$G / $\Delta$H |
|---|---|---|---|---|---|---|
| 1 | Beispiel 1 | 5$\mu$m | Makrofol DE 1-1 | 0/0/0/0/0 | HB | |
| 2 | Beispiel 1 | 8$\mu$m | Makrofol DE 1-1 | 0/0/0/0/0 | HB | |
| 3 | Beispiel 1 | 12$\mu$m | Makrofol DE 1-1 | 0/0/0/0/0 | HB | |
| 4 | Beispiel 1 | 17$\mu$m | Makrofol DE 1-1 | 0/0/0/0/0 | H | 5/5 |
| 5 | Beispiel 1 | 25$\mu$m | Makrofol DE 1-1 | 0/0/0/0/0 | H | |
| 6 | unbeschichtet | - | Makrofol DE 1-1 | 0/5/5/5/5 | 3B | 100 / 285 |

Tabelle 1 zeigt, dass die durch die erfindungsgemäße Beschichtung eine Verbesserung der Bleistifthärte und Kratzfestigkeit erreicht werden konnte. Die Beschichtung führte zu einer sehr guten Lösemittelbeständigkeit der Folien. Besonders zu vermerken ist die Lösemittelbeständigkeit der beschichteten Folien gegen Aceton. Aceton, das aggressivste Lösemittel für beschichtetes Polycarbonat, wie es beispielsweise unter der Marke Makrofol (Bayer) erhältlich ist, hat auf die erfindungsgemäße Endbeschichtung auch innerhalb einer Einwirkungszeit von 1 Stunde fast keine Wirkung (Kennwert $\leq$ 1; Scoring 0 bis 5). Das bedeutet, dass die Lösemittelbeständigkeit für diese Beschichtung auf dem Niveau der besten (aber nicht verformbaren) Hardcoat-Beschichtungen gemäß dem Stand der Technik liegt.

**Beispiel 6:** Herstellung der Testkörper und Prüfung der Schlagzähigkeit (Tieftemperaturzähigkeit)

Für die Untersuchung der Schlagzähigkeit wurden Muster hergestellt, indem erfindungsgemäß beschichtete flache Polycarbonat-Folien aus Makrofol DE 1-1 (250µm) gemäß den Nummern 1 bis 6 in A5-Format von der nicht-beschichteten Seite mit Polycarbonat hinterspritzt wurden. Das Hinterspritzen erfolgte auf einer Spritzgießmaschine der Firma Arburg Typ Allrounder 560 C 2000-675/350. Die Maschine hat einen Schneckendurchmesser von 45 mm. Das Makrolon wurde dabei mit einer Massetemperatur von 280°C hinterspritzt. Die Füllzeit zur Füllung des Werkzeuges betrug 2 sek. Die Werkzeugtemperatur wurde variiert. Es konnten gute Ergebnisse mit einer Werkzeugtemperatur von 80°C und 100°C erreicht werden. Einen negativen Effekt gab es diesbezüglich visuell nicht. Die Nachdruckzeit betrug 12 sek und die Kühlzeit lag bei 20 sek. Als Polycarbonat wurde Makrolon AL 2647 (Bayer MaterialScience AG) verwendet. Die Schichtstärke des aufgebrachten Polycarbonates betrug 4 mm. Aus den auf diese Weise erhaltenen Polycarbonat-Folien-Schichtkörpern wurden 60x60 mm$^2$ -Testkörper gesägt.

Der Plattendurchstoßversuch wurde in Anlehnung an DIN EN ISO 6603-1 mit 13 kg Fallmasse bei verschiedenen Auftreffgeschwindigkeiten mit einem instrumentierten Fallwerk der Fa. RoellAmsler (IFW 420) bei -30°C durchgeführt. Dorndurchmesser 20mm, Auflagerdurchmesser 40 mm. Die Auftreffgeschwindigkeit wurde dabei zur Bestimmung des Zäh/Spröd-Überganges variiert.

Die Art des Bruches (Zäh-/Sprödbruch) wurde anhand des Bruchbildes der geschlagenen Prüfkörper ermittelt: Als Zähbruch galt dabei sowohl eine plastische Deformation ohne Rissbildung (normgemäß), als auch (abweichend von der Norm) ein Durchstoßen des Probekörpers, wenn er in einem Stück verblieb. Als Sprödbruch wurde das Zerbrechen der Probe in zwei oder mehr Teile gewertet.

Die Ergebnisse dieser Tests sind in den Tabellen 2 und 3 zusammengefasst.

**Tabelle 2:** Durchstoßversuch (-30°C): Zugzone - erfindungsgemäße Lackierung; Schlag auf die PC-Seite

| Nr. | Lack | Dicke der Lackierung | Trägerfolie | Zähes Bruchbild bei [m/s] | Sprödbruch bei [m/s] | Kritische Geschwindigkeit am Zäh/Spröd-Übergang, [m/s] |
|---|---|---|---|---|---|---|
| 1 | Beispiel 1 | 5µm | Makrofol DE 1-1 | 8.0 / 9.9 / 12.2 | - | > 12.2 |
| 2 | Beispiel 1 | 8µm | Makrofol DE 1-1 | 9.3 / 10.6 / 11.2 | 12.2 | 12.7 $\pm$ 0.5 |
| 3 | Beispiel 1 | 12µm | Makrofol DE 1-1 | 3.6 / 4.0 / 5.4 | 5.0 / 6.6 | 5.2 $\pm$ 0.2 |
| 4 | Beispiel 1 | 17µm | Makrofol DE 1-1 | 2.9 / 3.6 | 4.0 / 4.9 6.5 | 3.8 $\pm$ 0.2 |
| 5 | Beispiel 1 | 25µm | Makrofol DE 1-1 | - | 2.2 / 3.2 / 4.9 | < 2.2 |

**Tabelle 3:** Durchstoßversuch (-30°C): Zugzone - Makrolon AL 2647; Schlag auf die beschichtete Seite

| Nr. | Lack | Dicke der Lackierung | Trägerfolie | Zähes Bruchbild bei [m/s] | Sprödbruch bei [m/s] | Kritische Geschwindigkeit am Zäh/Spröd-Übergang, [m/s] |
|---|---|---|---|---|---|---|
| 1 | Beispiel 1 | 5µm | Makrofol DE 1-1 | 8.1 / 10.0 / 12.0 | - | > 12.0 |
| 2 | Beispiel 1 | 8µm | Makrofol DE 1-1 | 8.0 / 9.3 / 12.3 | - | > 12.3 |
| 3 | Beispiel 1 | 12µm | Makrofol DE 1-1 | 6.6 / 9.2 / 12.2 | - | > 12.2 |
| 4 | Beispiel 1 | 17µm | Makrofol DE 1-1 | 8.0 / 9.3 / 12.2 | - | > 12.2 |
| 5 | Beispiel 1 | 25µm | Makrofol DE 1-1 | 8.0 / 9.2 / 12.2 | - | > 12.2 |

Wenn der Schlag von der Lackierungsseite kommt (Tabelle 3), zeigen alle Prüfkörper ein zähes Bild, das keine Versprödung des Polycarbonates durch die erfindungsgemäße Beschichtungen mit der Stärke zwischen 5 und 25 µm erkennen lässt.

Ein gleiches hochzähes Niveau zeigen auch die Prüfkörper mit der erfindungsgemäßen Beschichtung in einer Dicke von 5 µm. Bei den dickeren Lackierungen kann der Sprödbruch zwar verursacht werden, die kritischen Geschwindigkeiten dafür bleiben aber für die Beschichtungen bis 17 µm über dem Niveau von 2,0 m/s. Nur bei der Beschichtung von 25 µm fällt die kritische Geschwindigkeit unter diese Grenze, die als untere Grenze für anwendungstechnisch ausreichendes zähes Verhalten gesetzt ist.

Das bedeutet, dass die nach dem hier beschriebenen Verfahren hergestellten Kunststoffteile unabhängig von der Schlagrichtung eine für typische Anwendungen ausreichende Tieftemperaturzähigkeit aufweisen, wenn die Schichtstärke der Beschichtung der Folie 20 µm nicht überschreitet.

Die erfindungsgemäßen Formteile weisen damit eine ausgezeichnete richtungsunabhängige Schlagzähigkeit auch bei niedrigen Temperaturen bei einer gleichzeitigen besonderen Kratzfestigkeit und Lösemittelbeständigkeit der Oberfläche auf. Diese Eigenschaftskombination macht sie in hervorragender Weise geeignet für die Herstellung von Kunststoffteilen für Automobile, Flugzeuge, Schienenfahrzeuge, Elektronikartikel, Innen- und Außenarchitektur. Insbesondere eignen sich die erfindungsgemäßen Formteile für den Einsatz als transparente Scheiben im Architektur-, Automobil-, Flugzeug- und Schienenfahrzeugbereich.

**Patentansprüche**

1.  Beschichtungsmittel, umfassend

    (a) mindestens ein thermoplastisches Polymer mit einer mittleren Molmasse Mw, bestimmt durch Gelpermeationschromatographie von mindestens 100.000 g/mol in einem Gehalt von mindestens 30 Gew.-% des Festanteils des Beschichtungsmittels;
    (b) mindestens 30 Gew.-% eines UV-härtbaren Reaktivverdünners;
    (c) 0,1 bis 10 Gewichtsteile mindestens eines Fotoinitiators; und
    (d) mindestens ein organisches Lösungsmittel,

    wobei der Anteil an ethylenisch ungesättigten Gruppen mindestens 3 mol pro kg des Festanteils des Beschichtungsmittels beträgt,
    wobei das thermoplastische Polymer Polymethylmethacrylat oder Copolymere aus 70 Gew.-% bis 99,5 Gew.-% Methylmethacrylat und 0,5 Gew.-% bis 30 Gew.-% Methylacrylat umfasst, und
    wobei der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und
    Gemische davon ; oder Dipentaerythritol penta/hexa-acrylat umfasst.

2.  Beschichtungsmittel gemäß Anspruch 1, wobei das thermoplastische Polymer (a) eine Vicaterweichungstemperatur VET gemäß ISO 306 von mindestens 90 °C aufweist.

3.  Beschichtungsmittel gemäß Anspruch 1 oder 2 wobei der Reaktivverdünner (b) Dipentaerythritol penta/hexa-acrylat umfasst.

4.  Richtungsunabhängig schlagzähes 3-D-Formteil, umfassend ein thermoplastisches Polymer, eine Folie aus einem thermoplastischen Polymer und eine die Oberfläche des Formteils bildende kratzfeste und lösemittelbeständige Oberflächenbeschichtung der Folie mit einer Dicke im Bereich von ≥ 0,1 µm bis ≤ 20 µm, die erhältlich ist durch Beschichten einer Oberfläche der Folie mit einem Beschichtungsmittel gemäß mindestens einem der Ansprüche 1 bis 3.

5.  Formteil gemäß Anspruch 4, erhältlich durch film-insert-molding, wobei das film-insert-molding das Füllen einer 3D-geformten, die Schutzschicht umfassenden Folie mit der Schmelze eines thermoplastischen Polymers auf der Schutzschicht abgewandten Seite der Folie umfasst.

6.  Formteil gemäß Anspruch 4 oder Anspruch 5, wobei die Folie Polycarbonat umfasst.

**7.** Formteil gemäß mindestens einem der Ansprüche 4 bis 6, wobei das thermoplastische Polymer Polycarbonat umfasst.

**8.** Film-Insert-Molding-Verfahren zur Herstellung eines Formteils, umfassend die Schritte

(i) Beschichten einer Oberfläche einer Folie mit einem Beschichtungsmittel, umfassend

(a) mindestens ein lineares thermoplastisches Polymer mit einer mittleren Molmasse Mw, bestimmt durch Gelpermeationschromatographie von mindestens 100.000 g/mol in einem Gehalt von 30 Gew.-% des Festanteils des Beschichtungsmittels;
(b) mindestens 30 Gew.-% eines UV-härtbaren Reaktivverdünners
(c) 0,1 bis 10 Gewichtsteile mindestens eines Fotoinitiators; und
(d) mindestens ein organisches Lösungsmittel,

wobei der Anteil an ethylenisch ungesättigten Gruppen mindestens 3 mol pro kg des Festanteils des Beschichtungsmittels beträgt,
wobei das thermoplastische Polymer Polymethylmethacrylat oder Copolymere aus 70 Gew.-% bis 99,5 Gew.-% Methylmethacrylat und 0,5 Gew.-% bis 30 Gew.-% Methylacrylat umfasst,
wobei der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon ; oder Dipentaerythritol penta/hexa-acrylat umfasst; und die Dicke der Beschichtung im Bereich von $\geq 0,1\ \mu\text{m}$ bis $\leq 20\ \mu\text{m}$ liegt,
(ii) Trocknen der Beschichtung;
(iii) gegebenenfalls zurechtschneiden, dekaschieren, bedrucken und/oder thermisches oder mechanisches Verformen der Folie;
(iv) Härten der Beschichtung durch aktinische Strahlung, vorzugsweise UV-Strahlung;
(v) Hinterschichten der unbeschichteten Oberfläche der Folie mit einem thermoplastischen Polymer.

**9.** Verfahren gemäß Anspruch 8, wobei das Hinterschichten (V) mittels Extrusion oder Spritzguss, vorzugweise mit Polycarbonatschmelze, erfolgt.

**10.** Erzeugnis, umfassend ein Formteil gemäß mindestens einem der Ansprüche 4 bis 7.

**11.** Erzeugnis gemäß Anspruch 10, wobei das Erzeugnis eine transparente Verscheibung, Abdeckung oder Sichtfenster aus den Bereichen der Architektur, des Automobilbaus, des Schienenfahrzeugbaus, des Flugzeugbaus, der Fertigung von Visieren von Schutzhelmen und der Herstellung von Elektronikerzeugnissen oder transparenter, teiltransparenter oder nicht transparenter Teil einer Innenaustattung oder Außenausstattung von Automobilen, Schienenfahrzeugen oder Flugzeugen ist.

**12.** Verwendung des Formteils gemäß mindestens einem der Ansprüche 4 bis 7 als Architekturverscheibung, Automobilverscheibung, Schienenfahrzeugverscheibung, Wasserfahrzeugverscheibung, Fluggerätverscheibung, Karosserieabdeckteil, Windshield, Helmvisier, Elektronikgehäuseteil, Innen- bzw. Außenaustattungsteil von Automobilen, Schienenfahrzeugen, Wasserfahrzeugen oder Flugzeugen.

**Claims**

**1.** Coating composition comprising

(a) at least one thermoplastic polymer having a mean molar mass MW, determined by gel permeation chromatography, of at least 100 000 g/mol in a content of at least 30% by weight of the solids content of the coating composition;
(b) at least 30% by weight of a UV-curable reactive diluent;
(c) 0.1 to 10 parts by weight of at least one photoinitiator; and
(d) at least one organic solvent,

where the proportion of ethylenically unsaturated groups is at least 3 mol per kg of the solids content of the coating composition,
wherein the thermoplastic polymer comprises polymethylmethacrylate or copolymers of 70% by weight to 99.5% by weight of methyl methacrylate and 0.5% by weight to 30% by weight of methyl acrylate, and
wherein the reactive diluent (b) comprises alkoxylated diacrylates and/or dimethacrylates, alkoxylated triacrylates and/or trimethacrylates, alkoxylated tetraacrylates and/or tetramethacrylates, alkoxylated pentaacrylates and/or pentamethacrylates, alkoxylated hexaacrylates and/or hexamethacrylates, aliphatic urethane acrylates, polyester acrylates, polyacryloylacrylates and mixtures thereof; or dipentaerythrityl penta-/hexaacrylate.

2. Coating composition according to Claim 1, wherein the thermoplastic polymer (a) has a Vicat softening temperature VET to ISO 306 of at least 90°C.

3. Coating composition according to Claim 1 or 2, wherein the reactive diluent (b) comprises dipentaerythrityl penta-/hexaacrylate.

4. Non-directionally impact-resistant 3D moulding comprising a thermoplastic polymer, a film of a thermoplastic polymer and a scratch-resistant and solvent-resistant surface coating of the film, said surface coating forming the surface of the moulding and having a thickness in the range from $\geq 0.1\ \mu m$ to $\leq 20\ \mu m$, obtainable by coating a surface of the film with a coating composition according to at least one of Claims 1 to 3.

5. Moulding according to Claim 4, obtainable by film insert moulding, wherein the film insert moulding comprises the filling of a 3D-formed film comprising the protective layer with the melt of a thermoplastic polymer on the side of the film remote from the protective layer.

6. Moulding according to Claim 4 or Claim 5, wherein the film comprises polycarbonate.

7. Moulding according to at least one of Claims 4 to 6, wherein the thermoplastic polymer comprises polycarbonate.

8. Film insert moulding process for production of a moulding, comprising the steps of

   (i) coating a surface of a film with a moulding composition comprising

   (a) at least one linear thermoplastic polymer having a mean molar mass MW, determined by gel permeation chromatography, of at least 100 000 g/mol in a content of 30% by weight of the solids content of the coating composition;
   (b) at least 30% by weight of a UV-curable reactive diluent;
   (c) 0.1 to 10 parts by weight of at least one photoinitiator; and
   (d) at least one organic solvent,

   where the proportion of ethylenically unsaturated groups is at least 3 mol per kg of the solids content of the coating composition, wherein the thermoplastic polymer comprises polymethylmethacrylate or copolymers of 70% by weight to 99.5% by weight of methyl methacrylate and 0.5% by weight to 30% by weight of methyl acrylate, wherein the reactive diluent (b) comprises alkoxylated diacrylates and/or dimethacrylates, alkoxylated triacrylates and/or trimethacrylates, alkoxylated tetraacrylates and/or tetramethacrylates, alkoxylated pentaacrylates and/or pentamethacrylates, alkoxylated hexaacrylates and/or hexamethacrylates, aliphatic urethane acrylates, polyester acrylates, polyacryloylacrylates and mixtures thereof; or dipentaerythrityl penta-/hexaacrylate; and the thickness of the coating is in the range from $\geq 0.1\ \mu m$ to $\leq 20\ \mu m$,
   (ii) drying the coating;
   (iii) optionally cutting the film to size, delaminating, printing and/or thermally or mechanically forming the film;
   (iv) curing the coating by means of actinic radiation, preferably UV radiation;
   (v) insert-moulding the uncoated surface of the film with a thermoplastic polymer.

9. Process according to Claim 8, wherein the insert moulding (V) is effected by means of extrusion or injection moulding, preferably with polycarbonate melt.

10. Product comprising a moulding according to at least one of Claims 4 to 7.

11. Product according to Claim 10, wherein the product is a transparent glazing element, cover or viewing window from the fields of architecture, automobile construction, rail vehicle construction, aircraft construction, the manufacture of visors for protective helmets and the production of electronic products or of transparent, semitransparent or nontransparent parts of interior trim or exterior trim of automobiles, rail vehicles or aircraft.

12. Use of the moulding according to at least one of Claims 4 to 7 as an architectural glazing element, automobile glazing element, rail vehicle glazing element, water vehicle glazing element, aircraft glazing element, bodywork facing component, windshield, helmet visor, electronics housing component, or interior or exterior trim component of automobiles, rail vehicles, water vehicles or aircraft.

**Revendications**

1. Agent de revêtement, comprenant :

   (a) au moins un polymère thermoplastique ayant une masse molaire moyenne Mw, déterminée par chromatographie par perméation de gel, d'au moins 100 000 g/mol en une teneur d'au moins 30 % en poids de la teneur en solides de l'agent de revêtement ;
   (b) au moins 30 % en poids d'un diluant réactif durcissable par UV ;
   (c) 0,1 à 10 parties en poids d'au moins un photoinitiateur ; et
   (d) au moins un solvant organique,

   la proportion de groupes éthyléniquement insaturés étant d'au moins 3 moles par kg de la teneur en solides de l'agent de revêtement,
   le polymère thermoplastique comprenant du polyméthacrylate de méthyle ou des copolymères de 70 % en poids à 99,5 % en poids de méthacrylate de méthyle et 0,5 % en poids à 30 % en poids d'acrylate de méthyle, et
   le diluant réactif (b) comprenant des diacrylates et/ou diméthacrylates alcoxylés, des triacrylates et/ou triméthacrylates alcoxylés, des tétraacrylates et/ou tétraméthacrylates alcoxylés, des pentaacrylates et/ou pentaméthacrylates alcoxylés, des hexaacrylates et/ou hexaméthacrylates alcoxylés, des acrylates d'uréthane aliphatiques, des acrylates de polyester, des acrylates de polyacryle et leurs mélanges ; ou du penta/hexa-acrylate de dipentaérythritol.

2. Agent de revêtement selon la revendication 1, dans lequel le polymère thermoplastique (a) présente une température de ramollissement de Vicat VET selon ISO 306 d'au moins 90 °C.

3. Agent de revêtement selon la revendication 1 ou 2, dans lequel le diluant réactif (b) comprend du penta/hexa-acrylate de dipentaérythritol.

4. Pièce moulée 3D résistante au choc indépendamment de la direction, comprenant un polymère thermoplastique, un film en un polymère thermoplastique et un revêtement de surface du film résistant aux éraflures et résistant aux solvants formant la surface de la pièce moulée, en une épaisseur dans la plage allant de $\geq 0{,}1\ \mu m$ à $\leq 20\ \mu m$, qui peut être obtenue par revêtement d'une surface du film avec un agent de revêtement selon au moins l'une quelconque des revendications 1 à 3.

5. Pièce moulée selon la revendication 4, pouvant être obtenue par moulage par insertion de film, dans laquelle le moulage par insertion de film comprend le remplissage d'un film moulé en 3D comprenant la couche de protection avec la masse fondue d'un polymère thermoplastique sur le côté opposé à la couche de protection du film.

6. Pièce moulée selon la revendication 4 ou la revendication 5, dans laquelle le film comprend du polycarbonate.

7. Pièce moulée selon au moins l'une quelconque des revendications 4 à 6, dans laquelle le polymère thermoplastique comprend du polycarbonate.

8. Procédé de moulage par insertion de film pour la fabrication d'une pièce moulée, comprenant les étapes suivantes :

   (i) le revêtement d'une surface d'un film avec un agent de revêtement, comprenant

      (a) au moins un polymère thermoplastique linéaire ayant une masse molaire moyenne Mw, déterminée par chromatographie par perméation de gel, d'au moins 100 000 g/mol en une teneur d'au moins 30 % en poids de la teneur en solides de l'agent de revêtement ;
      (b) au moins 30 % en poids d'un diluant réactif durcissable par UV ;

(c) 0,1 à 10 parties en poids d'au moins un photoinitiateur ; et
(d) au moins un solvant organique,

la proportion de groupes éthyléniquement insaturés étant d'au moins 3 moles par kg de la teneur en solides de l'agent de revêtement,
le polymère thermoplastique comprenant du polyméthacrylate de méthyle ou des copolymères de 70 % en poids à 99,5 % en poids de méthacrylate de méthyle et 0,5 % en poids à 30 % en poids d'acrylate de méthyle,
le diluant réactif (b) comprenant des diacrylates et/ou diméthacrylates alcoxylés, des triacrylates et/ou triméthacrylates alcoxylés, des tétraacrylates et/ou tétraméthacrylates alcoxylés, des pentaacrylates et/ou pentaméthacrylates alcoxylés, des hexaacrylates et/ou hexaméthacrylates alcoxylés, des acrylates d'uréthane aliphatiques, des acrylates de polyester, des acrylates de polyacryle et leurs mélanges ; ou du penta/hexa-acrylate de dipentaérythritol ;
et l'épaisseur du revêtement se situant dans la plage allant de $\geq 0,1$ $\mu$m à $\leq 20$ $\mu$m,
(ii) le séchage du revêtement ;
(iii) éventuellement le façonnage par coupage à dimension, délaminage, impression et/ou façonnage thermique ou mécanique du film ;
(iv) le durcissement du revêtement par rayonnement actinique, de préférence rayonnement UV ;
(v) la stratification de la surface non revêtue du film avec un polymère thermoplastique.

9.  Procédé selon la revendication 8, dans lequel la stratification (V) a lieu par extrusion ou moulage par injection, de préférence avec une masse fondu de polycarbonate.

10. Article, comprenant une pièce moulée selon au moins l'une quelconque des revendications 4 à 7.

11. Article selon la revendication 10, dans lequel l'article est un vitrage transparent, un couvercle ou un hublot dans les domaines de l'architecture, de la construction d'automobiles, de la construction de véhicules ferroviaires, de la construction d'aéronefs, de la fabrication de visières de casques de protection et de la fabrication d'articles électroniques, ou une partie transparente, partiellement transparente ou non transparente d'un aménagement intérieur ou d'un aménagement extérieur d'automobiles, de véhicules ferroviaires ou d'aéronefs.

12. Utilisation de la pièce moulée selon au moins l'une quelconque des revendications 4 à 7 en tant que vitrage architectural, vitrage automobile, vitrage de véhicule ferroviaire, vitrage de bateau, vitrage de véhicule aérien, partie de recouvrement de carrosserie, pare-brise, visière de casque, partie de boîtier électronique, partie d'aménagement intérieur ou extérieur d'automobiles, de véhicules ferroviaires, de bateaux ou d'aéronefs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2113527 A1
- EP 0517044 A
- DE 1031512 B
- US 6228973 B
- WO 2008037364 A
- EP 1582549 A
- WO 2002026862 A
- WO 2005113639 A
- US 4185009 B
- DE 2500092 A
- DE 4240313 A
- DE 19943642 A
- US 5367044 B
- EP 1506249 A
- WO 2004082926 A1
- WO 0207947 A1

### In der Beschreibung aufgeführte Nicht-Patentliteratur

- **BECK ; ERICH.** *Pitture e Vernici, European Coatings,* vol. 82 (9), 10-19
- Into the third dimension: three ways to apply UV coating technology to 3D-automotive objects. *European Coatings Journal,* 2006, 32, , 34, , 36, , 38-39
- **PETZOLDT, JOACHIM.** Coloma, Fermin (BMS), New three-dimensionally formable hardcoat films. *JOT, Journal fuer Oberflaechentechnik,* vol. 50 (9), 40-42
- **PETZOLDT et al.** Development of new generation hardcoated films for complex 3D-shaped FIM applications, RadTech Asia. *Conference Proceedings,* 2011
- Chemistry and Physics of Polycarbonates, Polymer Reviews. **H. SCHNELL.** Polymer Reviews. Interscience Publishers, 1964, vol. 9, 10, 33 ff
- **PAUL W. MORGAN.** Condensation Polymers by Interfacial and Solution Methods. Interscience Publishers, 1965, 325
- Polycarbonate. **DRES. U. GRIGO ; K. KIRCHER ; P. R- MÜLLER.** Becker/Braun, Kunststoff-Handbuch, Band 3/1, Polycarbonate, Polyacetale, Polyester, Celluloseester. Carl Hanser Verlag, 1992, vol. 3-1, 118-145
- Encyclopedia of Polymer Science. 1969, vol. 10
- **H. SCHNELL.** Chemistry and Physics of Polycarbonates, Polymer Reviews. John Wiley and Sons, Inc, 1964, vol. 9
- **H. F. MARK et al.** Encyclopedia of Polymer Science and Engineering. J. Wiley, 1989, vol. 10, 1 ff
- Chemistry & Technology of UV & EB Formulation for Coatings, Inks & Paints. SITA Technology, 1991, vol. 2, 73-123, 123-135
- **FRIEDRICH JOHANNNABER ; WALTER MICHAELI.** Handbuch Spritzgießen. Hanser, 2001
- **MENGES ; MICHAELI ; MOHREN.** Anleitung zum Bau von Spritzgießwerkzeugen. Hanser, 1999